# EUROPÄISCHE PATENTSCHRIFT

(11) **EP 0 656 288 B1**
(45) Veröffentlichungstag und Bekanntmachung des Hinweises auf die Patenterteilung: **09.07.1997**
(21) Anmeldenummer: 94113596.4
(22) Anmeldetag: 31.08.1994
(51) Int. Cl.: B60S 1/40

(54) **Wischvorrichtung für Scheiben von Kraftfahrzeugen**
Device for wiping motor vehicle windscreens
Essuie-glace de véhicules à moteur

(30) Priorität: 04.12.1993 DE 9318596 U
(43) Veröffentlichungstag der Anmeldung: 07.06.1995
(73) Patentinhaber: ROBERT BOSCH GMBH, 70442 Stuttgart (DE)
(72) Erfinder: Pollaris, Eric, B-3500 Hasselt (BE); Verelst, Hubert, Dipl.-Ing. (TH), B-3300 Tienen (BE); Nys, Dirk, B-3390 Tielt-Winge (BE); Vanroy, Jan, B-3295 Schaffen (BE)

(56) Entgegenhaltungen:
- DE-A- 3 434 016

## Beschreibung

### Stand der Technik

Die Erfindung geht aus von einer Wischvorrichtung nach der Gattung des Hauptanspruchs. Es ist schon eine solche Wischvorrichtung im Handel, bei der der haarnadelförmige Adapter an seiner Außenseite einen der Haarnadelform folgenden Einlegekanal für das Hakenende des Wischerarms hat, wobei die Kanalbreite in ihrem oberen Kanalbereich auf das Maß eines breiten Wischerarmhakens abgestimmt ist. Um jedoch auch einen schmaleren Wischerarm an dem Adapter anschließen zu können, weist dieser Adapter am Kanalgrund mit seitlichem Abstand voneinander angeordnete, leistenartige Erhöhungen auf, zwischen die der schmalere Wischerarm zu liegen kommt. Diese Lösung kann jedoch von technisch nicht sonderlich gebildeten Endverbrauchern zu Mißverständnissen führen, so daß Wischerarm und Wischblatt falsch montiert werden.

### Vorteile der Erfindung

Die erfindungsgemäße Wischvorrichtung mit den kennzeichnenden Merkmalen des Hauptanspruchs hat demgegenüber den Vorteil, daß sich ohne besondere Überlegungen eine eindeutige Zuordnung zwischen dem Adapter und dem Wischerarm-Hakenende ergibt, so daß eine Falschmontage nicht mehr möglich ist. Als weiterer Vorteil ist anzusehen, daß die Montage des Wischblatts am Hakenende besonders einfach ist.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

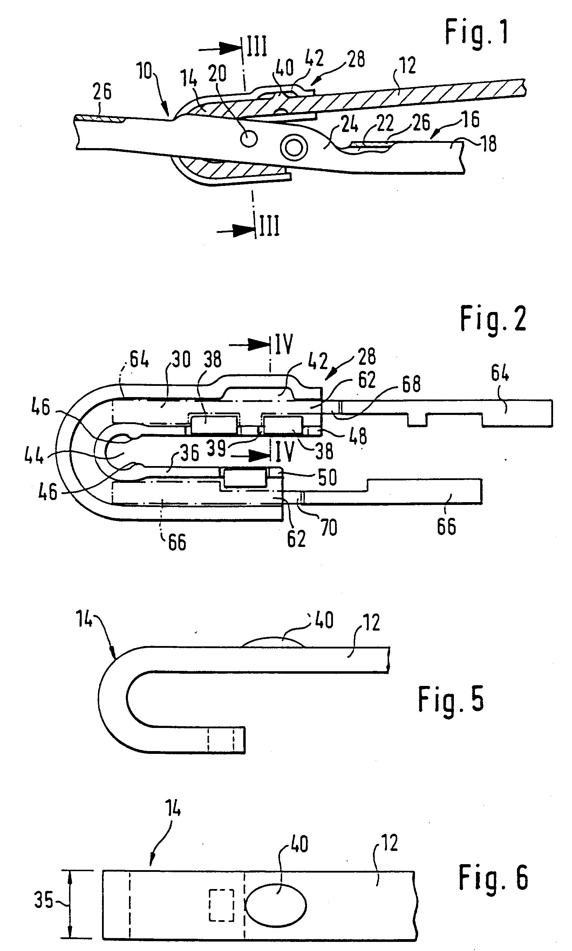

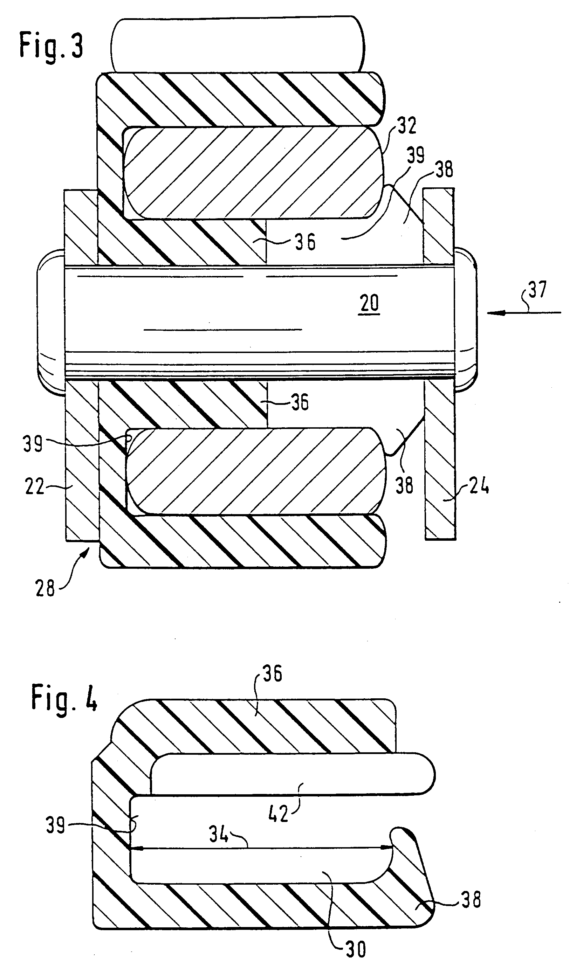

Ein Ausführungsbeispiel der Erfindung ist in der Zeichnung dargestellt und in der nachfolgenden Beschreibung näher erläutert. Es zeigen Figur 1 einen Teilschnitt durch einen zum Gestell eines Wischblatts gehörenden Haupt- oder Mittelbügels, der mittels eines Adapters am hakenförmigen Ende eines im Schnitt dargestellten Wischerarms angelenkt ist, Figur 2 den Adapter gemäß Figur 1 in Seitenansicht, vergrößert dargestellt, Figur 3 einen Schnitt durch die Anordnung gemäß Figur 1, entlang der Linie III-III geschnitten, in vergrößerter Darstellung, Figur 4 einen Schnitt durch den Adapter entlang der Linie IV-IV in Figur 3, ebenfalls vergrößert dargestellt, Figur 5 das hakenförmige Ende des Wischerarms, vergrößert dargestellt und Figur 6 eine Draufsicht auf das Wischerarmende gemäß Figur 5.

### Beschreibung des Ausführungsbeispiels

Zu einem in Figur 1 als Fragment dargestellten Wischhebel 10 gehören ein angetriebener Wischerarm 12, an dessen freien, hakenförmig gekrümmten Ende 14 ein Wischblatt 16 angelenkt ist. Das Wischblatt 16 hat ein mehrgliedriges Traggestell, mit einem Haupt- oder Mittelbügel 18, der die Verbindungsmittel zum Anschließen des Wischblatts an den Wischerarm aufweist. Wie weiter aus Figur 1 ersichtlich ist, umgreift dazu das hakenförmig gebogene Ende 14 des Wischerarms 12 einen Gelenkbolzen 20, der seitliche Gestellwangen 22, 24 des Hauptbügels 18 miteinander verbindet. Die seitlichen Gestellwangen 22 und 24 sind mit Ausnahme eines Mittelbereichs, in welchem der Gelenkbolzen 20 angeordnet ist, über einen Steg 26 des im wesentlichen U-förmigen Hauptbügels miteinander verbunden. Da der Steg 26 jedoch im Mittelbereich nicht mehr vorhanden ist, ergibt sich eine Ausgestaltung, die insbesondere der Figur 3 zu entnehmen ist. Wie Figur 3 zeigt, sind die beiden Gestellwangen 22 und 24 mit Abstand voneinander angeordnet. Zwischen den beiden Gestellwangen 22 und 24 ist ein Kunststoffadapter 28 an dem Gelenkbolzen 20 angelenkt. Der aus einem elastischen Kunststoff bestehende Adapter 28 hat beim Ausführungsbeispiel eine im wesentlichen U-förmige oder haarnadelförmige Gestalt. Wie die Figuren 1 bis 4 belegen, dient der Kunststoffadapter 28 zum Anschließen des Wischerarm-Hakenendes 14 am Wischblatt. Der Adapter 28 hat dazu eine kanalförmige Aufnahme 30, die zur einen Seite 32 (Figur 3) des Adapters hin offen ist. Der Aufnahmekanal 30 für den Wischerarmhaken 14 folgt der Krummung des Wischerarm-Hakenendes 14. Seine Breite ist so bemessen, daß der Wischerarm 14 ohne Schwierigkeiten von der Seite her in Richtung des Pfeiles 37 in den Kanal eingesetzt werden kann. Das Einsetzen des Wischerarmhakens 14 in den Adapter 28 erfolgt in den losen Adapter, so wie dieser in Figur 2 dargestellt ist. Die Kanaltiefe 34 (Figur 4) ist so auf die Breite 35 des Wischerarms 12 abgestimmt daß dieser vollständig in dem Kanal 30 untergebracht werden kann. Um ein unbeabsichtigtes Lösen des Adapters 28 vom Wischerarmhaken 14 zu vermeiden, weist der Adapter 28 an seiner innenliegenden Wandung 36 mehrere Rasthaken 38 auf, welche die vom Kanalgrund 39 abgewandte Seitenkante des Wischerarmhakens 14 rastend übergreifen. Die Rasthaken 38 sind in die innere Kanalwand 36 integriert und durch seitliche Schlitze 39 so freigestellt, daß sie sich auslenken lassen. Die Rasthaken 38 übergreifen den Kanal 30 partiell, so daß das Hakenende 14 gesichert ist. Die nutzbare Kanaltiefe wird durch das Maß 34 bezeichnet, welches vom Kanalgrund 39 zur diesem zugewandten Kante des Rasthakens 38 reicht. Um auch Wischerarmhaken mit einer warzenartigen Ausbauchung 40 (Fig. 5 und 6) mit dem Adapter 28 versehen zu können, weist der Kanal eine partielle, taschenartige Erweiterung 42 auf, in welche die Ausbauchung 40 zu liegen kommt. Wie insbesondere die Figuren 2 und 3 zeigen, ist im inneren Scheitelbereich des Adapters 28 eine Aufnahme 44 für den Gelenkbolzen 20 angeordnet. In dieser Aufnahme 44 wird der Gelenkbolzen 20 durch Wulste 46 gehalten, welche beim Einführen des Gelenkbolzens zwischen die beiden Schenkel 48, 50 vorübergehend elastisch zurückweichen und den Gelenkbolzen 20 in die Aufnahme 44 gelangen lassen. Danach federn die Wulste 46 wieder zurück und sichern den Gelenkbolzen 20 in seiner Lageraufnahme 44.

Damit auch Wischerarmhaken mit einer geringeren Breite als die mit 35 bezeichnete Breite in dem Adapter 28 fixiert werden können, weist der Adapter 28 Mittel auf, welche die Kanaltiefe 34 zumindest abschnittsweise entsprechend verringern. Beim Ausführungsbeispiel sind dazu an dem Kanalboden 62 zungenförmigen Beilagen 64, 66 angeordnet, welche über Filmgelenke 68, 70 mit dem Kanalboden einstückig verbunden sind. Dabei ist die Dicke der Beilagen so bemessen, daß sie die Differenz vom Maß 35 des breiteren Wischerarmhakens 14 zum schmaleren Wischerarmhaken ausgleichen. Soll also nun ein schmalerer Wischerarmhaken mit dem Adapter 28 versehen werden, werden die beiden Beilagen 64 und 66 so nach innen geklappt, wie dies durch die strichpunktierten Linien in Figur 2 angedeutet ist.

Wenn der Adapter 28 jedoch auf einen Wischerarmhaken mit der Breite gemäß der Bezugszahl 35 aufgebracht werden soll, werden an dem Adapter 28 die Beilagen 64 und 66 im Bereich der Filmgelenke 68 und 70 vom Körper des Adapters 28 abgetrennt.

Die Abstimmung der nutzbaren Kanaltiefe auf die Breite des erforderlichen Wischerarms erfolgt also unter Zuhilfenahme der Beilagen 64, 66, die entweder am Kanalboden angelegt oder gar nicht benutzt werden. Abweichend von dem dargestellten und beschriebenen Ausführungsbeispiel der Erfindung ist es auch denkbar, an dem Adapter eine vergleichsweise dünne deckelartige Abdeckung vorzusehen, die zum Verschließen der seitlichen Kanalaufnahmeöffnung dient und die vorzugsweise über ein Filmgelenk mit dem Adapterkörper verbunden ist. In diesem Falle könnten die Rasthaken 38 entfallen. Die Sicherung der deckelartigen Abdeckung würde in Betriebsstellung von einer der beiden Gestellwangen 22, 24 übernommen werden, wenn der Adapter zusammen mit dem Wischerarm in seine Betriebsstellung gebracht worden ist.

## Patentansprüche

1. Wischvorrichtung für Scheiben von Kraftfahrzeugen, mit einem über die Scheibe bewegbaren Wischerarm (12), an dessen einem, freien, hakenförmig gebogenen Ende (14) ein mit der Wischleiste auf der Scheibe angelegtes Wischblatt (16) gehalten ist, das einen von dem Hakenende des Wischerarms umgriffenen Gelenkbolzen (20) aufweist, der zwei mit Abstand voneinander angeordnete, zueinander parallele Wischblatt-Gestellwangen verbindet und an dem ein zwischen den Gestellwangen (22, 24) angeordneter Kunststoffadapter (28) zum Anschließen des Wischerarm-Hakenendes angelenkt ist, der eine Aufnahme zum Festhalten des Hakenendes aufweist, dadurch gekennzeichnet, daß die Aufnahme als ein in seinem Verlauf der Hakenkrümmung (14) folgender, zur einen Gestellwange (24) offener Aufnahmekanal (30) ausgebildet ist und daß an dem Adapter (28) Mittel (64, 66) zum wenigstens abschnittsweisen Verringern der Kanaltiefe (34) angeordnet sind.

2. Wischvorrichtung nach Anspruch 1, dadurch gekennzeichnet, daß die Mittel durch an dem Kanalboden (62) anlegbare Beilagen (64, 66) gebildet sind.

3. Wischvorrichtung nach Anspruch 2, dadurch gekennzeichnet, daß die Beilagen (64, 66) durch Filmgelenke (68, 70) mit dem Adapter (28) einstückig verbunden sind.

4. Wischvorrichtung nach einem der Ansprüche 1 bis 3, dadurch gekennzeichnet, daß die Kanaltiefe (34) kleiner ist als die Breite (35) des Hakenendes (14), daß an wenigstens einem Kanalrand angeordnete elastisch auslenkbare Rasthaken (38) den Kanal (30) zumindest partiell übergreifen und daß die nutzbare Kanaltiefe zuzüglich der wirksamen Länge der Rasthaken (38) der Breite (36) des Hakenendes (14) angepaßt ist.

5. Wischvorrichtung nach einem der Ansprüche 1 bis 4, dadurch gekennzeichnet, daß die Kanaltiefe auf die Breite (35) des aufzunehmenden Hakenendes (14) abgestimmt ist.

6. Wischvorrichtung nach Anspruch 5, dadurch gekennzeichnet, daß die Abstimmung unter Zuhilfenahme der Beilagen (64 bzw. 66) erfolgt.

7. Wischvorrichtung nach einem der Ansprüche 4 oder 5, dadurch gekennzeichnet, daß wenigstens eine der Kanalwände (36) aus dieser freigestellte, elastisch auslenkbare Rasthaken (38) aufweist, die den Kanal (30) zumindest partiell übergreifen und daß die nutzbare Kanaltiefe der Breite (35) des Hakenendes (14) angepaßt ist.

8. Wischvorrichtung nach einem der Ansprüche 1 bis 7, dadurch gekennzeichnet, daß der Aufnahmekanal (30) eine partielle, taschenartige Erweiterung (42) aufweist.

9. Wischvorrichtung nach einem der Ansprüche 1 bis 3 und nach Anspruch 8, dadurch gekennzeichnet, daß mit dem Adapter (28) eine deckelartige Abdeckung zum Verschließen der seitlichen Aufnahmekanalöffnung vorzugsweise über ein Filmgelenk verbunden ist.

10. Wischvorrichtung nach einem der Ansprüche 1 bis 9, dadurch gekennzeichnet, daß der Adapter haarnadelförmig gekrümmt ist, wobei die Krümmung dem Verlauf des Kanals (30) folgt und daß zwischen den sich so ergebenden Adapterschenkeln (48, 50) eine Aufnahme (44) für den Gelenkbolzen (20) angeordnet ist.

## Claims

1. Wiping device for windows of motor vehicles, with a wiper arm (12) which can be moved across the window and on one, free end (14) of which, which is bent in the shape of a hook, there is held a wiper blade (16) which is laid on the window by means of the wiper strip and has a hinge pin (20) around which the hook end of the wiper arm engages, which connects two mutually parallel wiper-blade frame side pieces arranged at a distance from one another and on which there is hinged a plastic adapter (28) which is arranged between the frame side pieces (22, 24), is intended for the connection of the hook end of the wiper arm and has a receptacle for holding fast the hook end, characterized in that the receptacle is designed as a receiving channel (30), the shape of which follows the curvature (14) of the hook and which is open towards one frame side piece (24), and in that means (64, 66) for reducing the channel depth (34) at least in some sections are arranged on the adapter (28).

2. Wiping device according to Claim 1, characterized in that the means are formed by shims (64, 66) that can be laid on the channel bottom (62).

3. Wiping device according to Claim 2, characterized in that the shims (64, 66) are connected integrally to the adapter (28) by film hinges (68, 70).

4. Wiping device according to one of Claims 1 to 3, characterized in that the channel depth (34) is smaller than the width (35) of the hook end (14), in that elastically deflectable latching hooks (38) arranged on at least one channel edge fit at least partially over the channel (30) and in that the usable channel depth plus the effective length of the latching hooks (38) is adapted to the width (36) of the hook end (14).

5. Wiping device according to one of Claims 1 to 4, characterized in that the channel depth is matched to the width (35) of the hook end (14) to be received.

6. Wiping device according to Claim 5, characterized in that matching is carried out with the aid of the shims (64 and 66).

7. Wiping device according to either of Claims 4 and 5, characterized in that at least one of the channel walls (36) has elastically deflectable latching hooks (38) which are cut free from the latter and fit at least partially over the channel (30) and in that the usable channel depth is adapted to the width (35) of the hook end (14).

8. Wiping device according to one of Claims 1 to 7, characterized in that the receiving channel (30) has a partial pocket-like widened portion (42).

9. Wiping device according to one of Claims 1 to 3, and Claim 8, characterized in that a lid-like cover for closing the lateral receiving-channel opening is connected to the adapter (28), preferably by a film hinge.

10. Wiping device according to one of Claims 1 to 9, characterized in that the adapter is curved in the form of a hair pin, the curvature following the shape of the channel (30), and in that a socket (44) for the hinge pin (20) is arranged between the adapter limbs (48, 50) thus formed.

## Revendications

1. Dispositif d'essuyage pour les vitres d'un véhicule automobile comprenant un bras d'essuie-glace (12), se déplaçant sur la vitre et dont une extrémité libre (14), recourbée en forme de crochet, retient un balai d'essuie-glace (16) appliqué sur la vitre par sa lame, et qui est muni d'un axe d'articulation (20) entouré par une extrémité en forme de crochet du bras, cet axe reliant deux joues parallèles, distantes de l'ossature du balai et un adaptateur en matière plastique (28) est prévu entre les joues (22, 24) de l'ossature pour raccorder de manière articulée l'extrémité en forme de crochet du bras, cet adaptateur ayant un logement pour retenir l'extrémité en forme de crochet,
caractérisé en ce que
le logement est en forme de canal de réception (30), ouvert vers une joue (24) de l'ossature, et sa forme suit le tracé de la courbure de crochet (14), l'adaptateur (28) comportant les moyens (64, 68) pour diminuer au moins localement la profondeur de canal (34).

2. Dispositif selon la revendication 1,
caractérisé en ce que
les moyens sont constitués par des cales (64, 66) qui se placent contre le fond (62) du canal.

3. Dispositif selon la revendication 2,
caractérisé en ce que
les cales (64, 66) sont reliées en une seule pièce à l'adaptateur (28) par des charnières en forme de film (68, 70).

4. Dispositif selon l'une des revendications 1 à 3,
caractérisé en ce que
la profondeur de canal (34) est inférieure la largeur (35) de l'extrémité (14) du crochet, et sur au moins un bord de canal, des crochets (38) déformables élastiquement recouvrent au moins partiellement le canal et la profondeur utile du canal y compris la longueur efficace des crochets (38) est adaptée à la largeur (36) de l'extrémité (14) du crochet.

5. Dispositif selon l'une des revendications 1 à 4,
caractérisé en ce que
la profondeur du canal est choisie en fonction de la largeur (35) de l'extrémité de crochet (14) à recevoir.

6. Dispositif selon la revendication 5,
caractérisé en ce que
le choix tient compte de l'utilisation des cales (64, 66).

7. Dispositif selon l'une des revendications 4 ou 5,
caractérisé en ce qu'
au moins l'une des parois (36) du canal comporte des crochets (38), dégagés, déformables élastiquement, qui enjambent au moins partiellement la canal (30) et la profondeur utile du canal est adaptée à la largeur (35) de l'extrémité en forme de crochet (14).

8. Dispositif selon l'une des revendications 1 à 7,
caractérisé en que
le canal (30) présente une extension partielle (42) en forme de poche.

9. Dispositif selon l'une des revendications 1 à 3 et 8,
caractérisé en ce qu'
un recouvrement en forme de couvercle est relié de préférence par une charnière en forme de film à l'adaptateur (28) pour fermer l'ouverture latérale du canal de réception.

10. Dispositif selon l'une des revendications 1 à 9,
caractérisé en ce que
l'adaptateur est courbé en forme d'épingle à cheveux, la courbure suivant le tracé du canal (30) et entre les branches d'adaptateur (48, 50) qui en résultent se trouve un logement (44) pour l'axe d'articulation (20).
